# FASCICULE DE BREVET EUROPEEN

(11) **EP 2 355 282 B1**
(45) Date de publication et mention de la délivrance du brevet: **13.04.2016**
(21) Numéro de dépôt: 11290009.7
(22) Date de dépôt: 11.01.2011
(51) Int. Cl.: H02G 3/14

(54) **Support d'appareillage et appareillage électrique comportant un tel support d'appareillage**
Gerätehalterung und mit einer solchen Gerätehalterung ausgestattetes elektrisches Gerät
Equipment support and electrical equipment comprising such an equipment support

(30) Priorité: 09.02.2010 FR 1000529
(43) Date de publication de la demande: 10.08.2011
(73) Titulaire: Legrand France, 87000 Limoges (FR); Legrand SNC, 87000 Limoges (FR)
(72) Inventeur: Mourgaud, Jean-François, 87220 Feytiat (FR); Maziere, Laurent, 87000 Limoges (FR)
(74) Mandataire: Orsini, Fabienne

(56) Documents cités:
- EP-A1- 0 620 620
- AT-U1- 603
- FR-A1- 2 695 532
- NL-A- 6 817 069

## Description

### DOMAINE TECHNIQUE AUQUEL SE RAPPORTE L'INVENTION

La présente invention concerne de manière générale la fixation en position juxtaposée de deux supports d'appareillage électrique à une même boîte murale.

Elle concerne plus particulièrement un support d'appareillage à fixer à une boîte murale encastrée.

Elle concerne également un appareillage électrique comportant un tel support d'appareillage et au moins un mécanisme d'appareillage logé dans l'ouverture centrale du cadre de ce support d'appareillage.

### ARRIÈRE-PLAN TECHNOLOGIQUE

Un appareillage électrique comporte généralement un support d'appareillage en forme de cadre qui est apte à recevoir dans son ouverture centrale un mécanisme d'appareillage et qui est agencé pour être fixé à une boîte murale.

Comme cela est par exemple décrit dans le document EP 0 620 620, un tel support d'appareillage comprend à cet effet des moyens d'assujettissement à la boîte murale qui interviennent en position diamétralement opposée sur le cadre.

Il peut par exemple s'agir de simples orifices en forme de trou de serrure, propres au passage de vis de fixation, et qui s'étendent globalement selon des arcs de cercles centrés sur le centre de l'ouverture centrale du cadre.

Ces orifices présentent à cet effet des extrémités circulaires de grandes dimensions pour le passage de la tête de la vis de fixation, et un corps allongé de plus faible largeur, dont les bords forment des appuis pour la tête de la vis de fixation.

La fixation du support d'appareillage à la boîte murale se décompose alors en quatre opérations principales consistant à :
- dévisser les vis de fixation engagées dans les puits de vissage de la boîte murale, de manière que leurs têtes émergent sur une hauteur supérieure à l'épaisseur des bords d'appui du cadre du support d'appareillage,
- rapporter le support d'appareillage sur la boîte murale de manière légèrement inclinée, de telle manière que les têtes des vis de fixation passent au travers des extrémités circulaires des orifices du cadre du support d'appareillage, puis
- redresser le support d'appareillage en le faisant pivoter par rapport à la boîte murale, de telle manière que les bords d'appui du cadre s'engagent sous les têtes des vis de fixation, et enfin
- visser les vis de fixation sur les bords d'appui pour fixer rigidement le support d'appareillage à la boîte murale.

On peut être amené à devoir associer au moins deux supports d'appareillage du même type horizontalement et/ou verticalement pour constituer des blocs d'appareillages électriques juxtaposés.

On connaît pour cela du document FR 2 695 532 un support d'appareillage comportant des moyens d'association avec un autre support du même type, qui permettent ainsi d'assembler ces deux supports avant de les fixer sur une boîte murale multipostes.

La fixation de ces supports s'avère toutefois malcommode dans la mesure où il est n'est pas possible de faire pivoter ces supports sur la boîte. Il est alors nécessaire de dévisser entièrement les vis de fixation hors des puits de vissage avant de rapporter les deux supports sur la boîte, puis de revisser complètement ces vis de fixation.

Les supports du type de ceux décrits dans le document EP 0 620 620 ne comportent en revanche pas de moyens d'association. Lorsque l'on souhaite fixer deux supports de ce type sur une boîte murale, on procède alors tout d'abord à la fixation d'un premier de ces supports puis d'un second.

On comprend toutefois qu'après avoir fixé le premier support d'appareillage à la boîte murale, ce premier support d'appareillage gêne la fixation du second support d'appareillage puisqu'il l'empêche d'être rapporté de manière inclinée sur la boîte murale. Un des coins du second support d'appareillage vient en effet buter contre la face avant du premier support d'appareillage.

Il est alors nécessaire de dévisser les vis de fixation du second support d'appareillage sur une hauteur plus importante afin que les têtes des vis de fixation puissent néanmoins passer au travers des extrémités circulaires des orifices du cadre de ce second support d'appareillage.

Cette opération de dévissage est toutefois possible seulement si le cadre du premier support d'appareillage est peu épais, ce qui est généralement le cas lorsqu'il est réalisé en matière métallique.

Il n'en est pas de même avec les cadres en matière plastique. Pour présenter un rigidité équivalente à celle des cadres en matière métallique, les cadres en matière plastique présentent en effet généralement des épaisseurs supérieures, qui nécessitent alors le dévissage complet des vis de fixation hors des puits de vissage de la boîte murale.

Les opérations d'installation du second support d'appareillage sur la boîte murale sont alors non seulement fastidieuses, mais elles risquent en outre de provoquer la perte des vis de fixation.

Une solution envisagée pour faciliter la fixation de deux supports d'appareillage en position juxtaposée est alors de diminuer l'épaisseur du cadre sans toutefois réduire sa rigidité, en chargeant la matière plastique utilisée en fibres de verre. Ces supports d'appareillage sont toutefois plus onéreux à fabriquer puisque la matière utilisée est plus chère et nécessite un remplacement plus fréquent des moules de fabrication.

### OBJET DE L'INVENTION

La présente invention propose alors un nouveau support d'appareillage, de fabrication peu onéreuse et d'assemblage en position juxtaposée plus aisé.

Plus particulièrement, on propose selon l'invention un support d'appareillage tel que défini dans la revendication 1.

Ainsi, grâce à l'invention, le second support d'appareillage peut être rapporté de manière inclinée sur la boîte murale, en engageant son coin dans le dégagement prévu en creux sur la face avant du cadre du premier support d'appareillage.

Il n'est donc pas nécessaire de dévisser complètement les vis de fixation hors de leurs puits de vissage pour que les têtes des vis de fixation passent au travers des extrémités circulaires des orifices du cadre du second support d'appareillage, ce qui facilite l'installation de ce second support d'appareillage.

Le renfoncement qui délimite le dégagement nuit en outre peu à la rigidité du cadre qui pourra par ailleurs présenter une épaisseur importante pour compenser les faibles propriétés mécaniques du plastique non chargé en fibres de verre.

D'autres caractéristiques avantageuses et non limitatives du support d'appareillage conforme à l'invention sont définies dans les revendications 2 et suivantes.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un support d'appareillage selon l'invention,
- la figure 2 est une vue schématique de face du support d'appareillage de la figure 1,
- la figure 3 est une vue schématique en coupe selon le plan A-A de la figure 2,
- la figure 4 est une vue schématique de côté de deux supports d'appareillage du type de celui représenté sur la figure 1, positionnés au-dessus d'une boîte murale,
- la figure 5 est schématique de face des deux supports d'appareillage et de la boîte murale de la figure 4,
- la figure 6 est une vue détaillée en perspective du support d'appareillage de la figure 1, et
- les figures 7 à 9 sont des vues schématiques en perspective de trois variantes de réalisation du support d'appareillage de la figure 1.

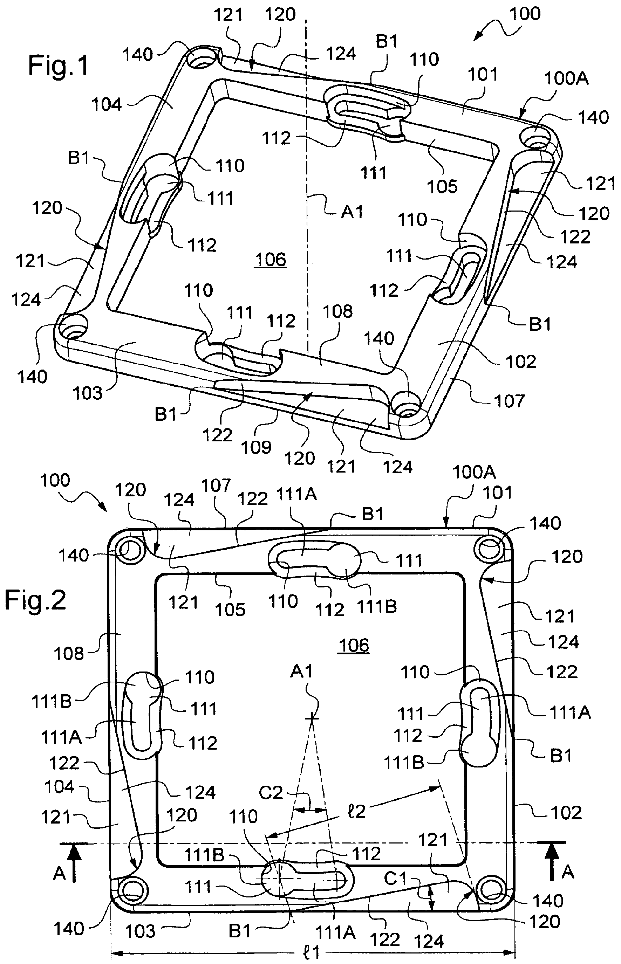

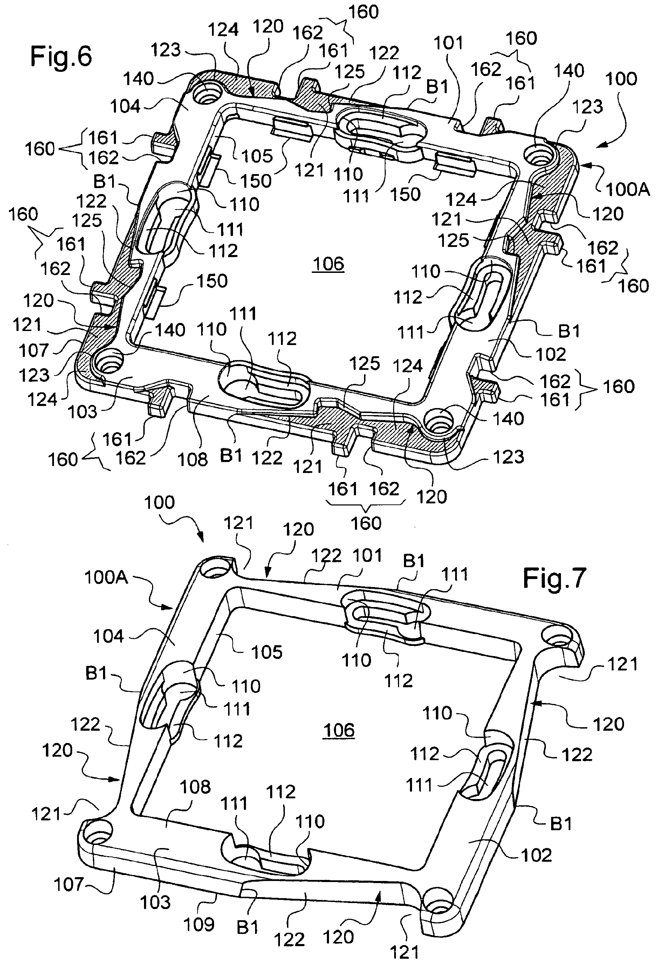

Sur les figures 1 à 3, on a représenté une vue schématique d'un support d'appareillage 100 d'un appareillage électrique, agencé pour loger au moins un socle de mécanisme d'appareillage. Une vue détaillée de ce support d'appareillage 100 est représentée sur la figure 6.

Ce support d'appareillage 100 est destiné à être fixé à une boîte murale encastrée dans ou rapportée en saillie sur une paroi quelconque, par exemple, une paroi alvéolaire.

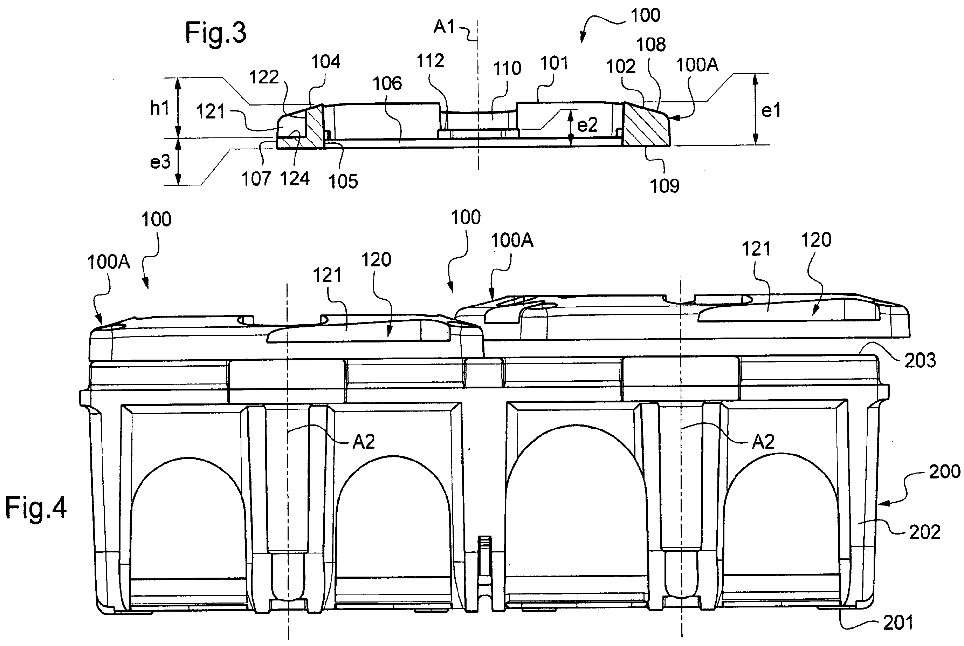

Une telle boîte murale 200 à encastrer est par exemple représentée sur la figure 4. Telle que représentée sur cette figure, la boîte murale 200 est prévue pour accueillir deux supports d'appareillage 100 du même type. Elle comporte à cet effet une paroi de fond 201 rectangulaire bordée à l'avant par une paroi latérale 202. Cette paroi latérale 202 définit en face avant une tranche 203 sur laquelle peuvent s'appuyer les deux supports d'appareillage 100.

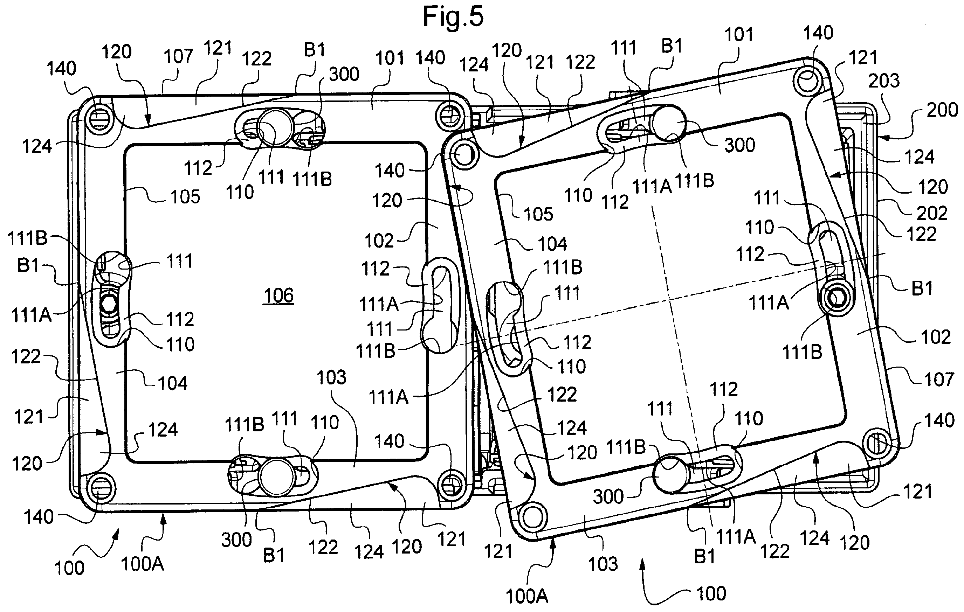

La paroi latérale 202 porte par ailleurs sur sa face intérieure des puits de vissage d'axe A2 orthogonaux à la paroi de fond 201, dans lesquels sont engagés des vis de fixation 300 (figure 5). Initialement, à la livraison, ces vis de fixation 300 sont complètement vissées dans leurs puits de vissage, si bien que leurs têtes affleurent la tranche 203 de la boîte.

Cette boîte murale 200 ne faisant pas l'objet de la présente invention, elle ne sera pas décrite ici plus en détail.

Chaque support d'appareillage 100 sert au montage à l'intérieur de la boîte murale d'un ou plusieurs mécanismes d'appareillage, par exemple un mécanisme d'interrupteur, de prise de courant, de prise de téléphone ou encore de disjoncteur.

Comme le montrent les figures 1 à 3, le support d'appareillage 100 comporte à cet effet un cadre 100A plat, ici de forme carrée, qui présente une face arrière 109 destinée à être plaquée contre la boîte murale, et une face avant 108 opposée.

Ce cadre 100A comporte ainsi quatre branches 101, 102, 103, 104 et est défini entre un bord périphérique extérieur 107 carré et un bord périphérique intérieur 105 également carré, qui délimite une ouverture centrale 106 d'axe A1.

Le terme « bord périphérique » désigne ici plus précisément la tranche du cadre du support d'appareillage 100. Chacun des bords périphériques intérieur 105 et extérieur 107 du cadre 100A présente donc quatre côtés.

Comme on peut le voir sur les figures 1 et 2, le support d'appareillage 100 comporte par ailleurs des moyens d'assujettissement propres à permettre la fixation du cadre 100A à la boîte murale.

Ces moyens d'assujettissement comprennent, au centre de chacune des quatre branches 101, 102, 103, 104 du cadre 100A du support d'appareillage 100, un orifice 111 en forme de trou de serrure qui s'étend globalement selon un arc de cercle centré sur l'axe A1 de l'ouverture centrale 106 du cadre 100A.

Comme cela apparaît sur la figure 2, chaque orifice 111 présente alors une partie oblongue 111A de largeur égale, au jeu près, au diamètre des corps filetés des vis de fixation 300, et une extrémité circulaire 111B de diamètre égal, au jeu près, au diamètre des têtes des vis de fixation 300.

Comme le montre la figure 1, chaque orifice 111 est plus précisément ménagé dans le fond 112 d'un renfoncement 110 prévu en creux dans la face avant de chaque branche 101, 102, 103, 104 du cadre 100A.

Le fond de ce renfoncement 110, qui borde ainsi l'orifice 111, forme alors un bord d'appui 112 sur lequel peut s'appuyer la tête d'une vis de fixation engagée au travers de cet orifice 111.

Comme le montrent les figures 4 et 5, grâce à ces moyens d'assujettissement, la fixation d'un premier support d'appareillage 100 à la boîte murale 200 se décompose alors en quatre opérations principales consistant à :
- dévisser les deux vis de fixation 300 engagées dans les puits de vissage correspondant de la boîte murale 200, sur une longueur telle que leurs têtes émergent au-dessus de la tranche 203 de la boîte murale 200 à une hauteur supérieure à l'épaisseur e2 (figure 3) des bords d'appui 112 du cadre 100A,
- rapporter le premier support d'appareillage 100 sur la tranche 203 de la boîte murale 200 en l'inclinant légèrement autour de l'axe A1 de telle sorte que les têtes des deux vis de fixation 300 passent au travers des extrémités circulaires 111B des orifices 111 prévus sur deux branches 101, 103 opposées du cadre 100A, puis

- redresser le support d'appareillage en le faisant pivoter autour de l'axe A1, de telle manière que les bords d'appui 112 du cadre 100A s'engagent sous les têtes des vis de fixation 300, et que les deux branches 101, 103 du cadre 100A s'alignent dans le prolongement de la paroi latérale 202 de la boîte murale 200, et enfin
- visser les vis de fixation 300 sur les bords d'appui 112 pour bloquer la face arrière 109 du cadre 100A du premier support d'appareillage 100 contre la boîte murale 200 afin de fixer rigidement ce support à la boîte.

Une fois le premier support d'appareillage 100 fixé à la boîte murale 200, la face arrière 109 de son cadre 100A s'appuie soit sur la paroi murale elle-même, soit sur la tranche avant 203 de la boîte murale 200, en particulier si la paroi murale est une cloison creuse.

Ici, le bord périphérique extérieur 107 du cadre 100A présente, sur au moins le quart de la longueur l1 d'au moins un de ses quatre côtés, un renfoncement 120 qui délimite un dégagement 121 en creux sur la face avant 108 du cadre 100A (voir figure 2).

En l'espèce, tel que représenté sur les figures, le bord périphérique extérieur 107 du cadre 100A du support d'appareillage 100 présente quatre renfoncements 120 respectivement situés sur ses quatre côtés, de manière deux à deux symétrique par rapport à l'axe A1 de l'ouverture centrale 106 du cadre 100A.

Chaque dégagement 121 s'étend ici en longueur depuis le milieu B1 du côté correspondant du bord périphérique extérieur 107 du cadre 100A, jusqu'à proximité de l'un des coins de ce cadre 100A.

Chaque dégagement 121 s'étend plus précisément sur un secteur angulaire qui est centré sur le milieu B1 de ce côté du bord périphérique extérieur 107 du cadre 100A, et qui est bordé d'un côté par ce côté du bord périphérique extérieur 107 et de l'autre par une partie droite 122 du renfoncement 120.

Comme le montre la figure 2, cette partie droite 122 du renfoncement 120 présente une longueur l2 légèrement inférieure à la moitié de la longueur l1 du côté du bord périphérique extérieur 107 du cadre 100A. Elle présente ici une longueur l2 comprise entre 30 et 34 millimètres tandis que la longueur l1 du côté du bord périphérique extérieur 107 du cadre 100A est sensiblement égale à 71 millimètres.

Cette partie droite 122 du renfoncement 120 est par ailleurs inclinée par rapport au côté correspondant du bord périphérique extérieur 107 d'un angle d'ouverture c1 qui est ici supérieur ou égal à la moitié de l'angle c2 sous-tendu par l'arc de cercle formé par chaque orifice 111. Ici, l'angle c1 est compris entre 10 et 12 degrés tandis que l'angle c2 est compris entre 19 et 21 degrés.

Comme le montre la figure 3, le dégagement 121 présente par ailleurs une profondeur h1 à partir de la face avant 108 du cadre 100A du support d'appareillage 100 qui est supérieure ou égale à la moitié de l'épaisseur maximale e1 du cadre 100A.

La profondeur h1 de ce dégagement est ici strictement inférieure à l'épaisseur maximale e1 du cadre 100A. Le dégagement 121 est par conséquent délimité du côté de la face arrière 109 du cadre 100A par un fond 124.

En variante, comme le montre la figure 7, on pourra prévoir que chaque dégagement 121 s'étende sur toute l'épaisseur du cadre 100A, depuis sa face avant 108 jusqu'à sa face arrière 109. Dans cette variante, le cadre 100A présentera alors une rigidité réduite par rapport au cadre représenté sur les figures 1 à 6. Comme cela sera exposé plus en détail dans la suite du texte, le montage de ce cadre sur la boîte murale en position juxtaposée avec un autre cadre du même type sera en revanche facilité.

Par conséquent, comme le montrent les figures 4 et 5, la fixation d'un second support d'appareillage 100 à la boîte murale 200, en position juxtaposée avec le premier support d'appareillage, se décompose en quatre opérations principales consistant à :
- dévisser les deux vis de fixation 300 engagées dans les puits de vissage correspondant de la boîte murale 200, sur une longueur telle que leurs têtes émergent au-dessus de la tranche 203 de la boîte murale 200 à une hauteur supérieure à la somme de l'épaisseur e2 (figure 3) des bords d'appui 112 du cadre 100A du second support d'appareillage et de l'épaisseur e3 du fond 124 du dégagement 121 du premier support d'appareillage,
- rapporter le second support d'appareillage 100 sur la tranche 203 de la boîte murale 200 en l'inclinant légèrement autour de l'axe A1 de telle sorte que les têtes des deux vis de fixation 300 passent au travers des extrémités circulaires 111B des orifices 111 prévus sur deux branches 101, 103 opposées du cadre 100A et que l'un des coins du cadre 100A de ce second support d'appareillage 100 s'engage dans le dégagement 121 correspondant du cadre du premier support d'appareillage 100, puis
- redresser le support d'appareillage en le faisant pivoter autour de l'axe A1, de telle manière que les bords d'appui 112 du cadre 100A s'engagent sous les têtes des vis de fixation 300, et que le cadre du second support d'appareillage 100 se juxtapose parfaitement avec le cadre du premier support d'appareillage 100, et enfin
- visser les vis de fixation 300 sur les bords d'appui 112 pour rigidement fixer ce second support d'appareillage 100 à la boîte murale 200.

Une fois le premier support d'appareillage 100 fixé à la boîte murale 200, la face arrière 109 de son cadre 100A s'appuie soit sur la paroi murale elle-même, soit sur la tranche avant 203 de la boîte murale 200, en particulier si la paroi murale est une cloison creuse.

On comprend qu'avec le cadre 100A représenté sur la figure 7, dont les dégagements 121 sont dépourvus de fond, il sera seulement nécessaire de dévisser préalablement les vis de fixation sur une longueur réduite, égale à l'épaisseur des bords d'appui 112 du cadre 100A, au bénéfice de la rapidité et de la facilité d'installation du second support d'appareillage.

Sur la figure 6, on a représenté une vue détaillée du support d'appareillage 100.

Tel que représenté sur cette figure, le bord périphérique intérieur 105 du cadre 100A du support d'appareillage 100 est équipé de moyens de fixation d'un ou plusieurs socles (non représentés) de mécanisme d'appareillage dans l'ouverture centrale 106. Ces moyens de fixation comportent plus précisément, sur chaque côté du bord périphérique intérieur 105 du cadre 100A, deux clips 150 situés de part et d'autre de l'orifice 111, auxquels peuvent s'accrocher des moyens d'encliquetage prévus en correspondance sur une plaque de façade enjoliveur.

Le cadre 100A du support d'appareillage 100 comporte par ailleurs des moyens de clippage 140 d'une coquille de protection de chantier, permettant de peindre la paroi murale sans tacher le support d'appareillage 100. Ces moyens de clippage 140 comportent en l'espèce, à chaque coin du cadre 30A, une ouverture d'accueil d'un pion d'encliquetage prévu en correspondance sur la face arrière de la coquille de protection de chantier.

Pour assurer un parfait alignement des premier et second supports d'appareillage en position juxtaposée, le cadre 100A de chaque support d'appareillage 100 comporte en outre, sur chacun des quatre côtés de son bord périphérique extérieur 107, des moyens d'emboîtement 160. Ici, ces moyens d'emboîtement 160 comprennent, en saillie du bord périphérique extérieur 107 du cadre 100A, deux éléments mâles 161, et, en renfoncement de ce bord périphérique extérieur 107, deux éléments femelles 162 de formes complémentaires.

Telle que représentée sur la figure 6, la partie droite 122 de chaque renfoncement 120 s'étend jusqu'à hauteur de l'ouverture d'accueil 140 correspondante, de sorte qu'elle ne débouche pas sur le bord périphérique extérieur 107 du cadre 100A. Cette patrie droite 122 est alors prolongée par une partie arrondie 123 qui longe extérieurement l'ouverture d'accueil 140, jusqu'au bord périphérique extérieur 107 du cadre 100A.

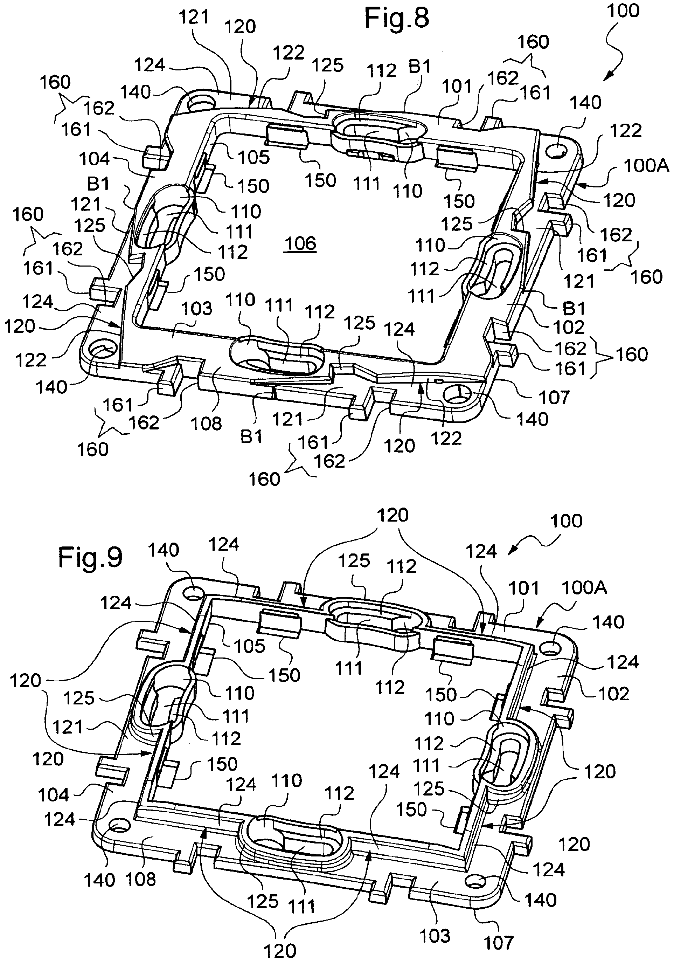

En variante, comme le montre la figure 8, on pourrait prévoir que les parties droites 122 des renfoncements 120 s'étendent jusqu'au-delà des ouvertures d'accueil 140 des pions de la coquille de protection de chantier, de sorte qu'elles débouchent sur le bord périphérique extérieur 107 du cadre 100A. De cette manière, les ouvertures d'accueil 140 sont situées non plus à l'extérieur mais à l'intérieur des dégagements 121, dans une partie du cadre 100A de faible épaisseur.

Le cadre 100A de ce support d'appareillage est ici avantageusement formé d'une seule pièce par moulage d'une matière plastique isolante non chargée en fibres, telle que l'ABS (Acrylonitrile Butadiène Styrène).

La présente invention n'est nullement limitée aux modes de réalisation décrits et représentés, mais l'homme du métier saura y apporter toute variante conforme à son esprit.

En particulier, comme le montre la figure 9, on pourra prévoir que chaque renfoncement 120 s'étende non pas sur environ une moitié de la longueur du côté correspondant du bord périphérique extérieur 107 du cadre 100A, mais au contraire sur l'ensemble de la longueur de ce côté.

On pourra plus précisément prévoir que chaque renfoncement 120 présente une partie arrondie 125 qui longe l'orifice 111 de la branche 101 - 104 correspondante du cadre 100A, et deux parties droites 124 qui s'étendent de part et d'autre de cette partie arrondie 125, jusqu'aux renfoncements 120 adjacents du cadre 100A.

De cette manière, les quatre renfoncements 120 délimiteront ensemble un unique dégagement 121 qui s'étendra sur l'ensemble de la périphérie du cadre 100A. Ces quatre renfoncements 120 délimiteront en outre avec l'ouverture centrale 106 du cade 100A une nervure périphérique qui borde cette ouverture centrale 106 et qui s'élève vers l'avant du cadre 100A afin de rigidifier le support d'appareillage 100.

Selon une autre variante, on pourra prévoir que le cadre présente une forme non pas carrée, mais plutôt rectangulaire pour accueillir un plus grand nombre de socles de mécanisme d'appareillage.

Selon une autre variante, on pourra prévoir que les moyens d'assujettissement du cadre à la boîte murale comportent, outre les orifices en forme de trous de serrure, des vis de griffe agencées pour s'accrocher à la face intérieure de la paroi latérale de la boîte murale. Ces vis de griffe pourraient également être agencées pour s'accrocher à la face intérieure d'une boîte de sol ou à la face arrière d'une cloison.

Encore en variante, on pourra prévoir que le bord périphérique extérieur du cadre présente non pas quatre renfoncements 120 situés sur ses quatre côtés, mais seulement deux renfoncements respectivement situés sur deux de ses côtés opposés, de manière symétrique par rapport au centre du cadre.

On pourra aussi prévoir que le support comporte, sur au moins deux côtés opposés du cadre, deux renfoncements s'étendant sur deux secteurs angulaires opposés, centrés sur le milieu du côté correspondant du bord périphérique extérieur du cadre.

Plus généralement, on pourrait prévoir que chaque renfoncement s'étende sur une superficie supérieure à celle d'un secteur angulaire, pour autant que ce renfoncement englobe un secteur angulaire centré sur le milieu du côté correspondant du bord périphérique extérieur du cadre, et qu'il permette à un autre support du même type de pivoter par rapport à lui.

## Revendications

1. Support d'appareillage (100) comportant un cadre (100A) qui présente au moins deux orifices oblongs (111) d'accueil de vis de fixation (300), en forme d'arcs de cercle, et qui comporte un bord périphérique extérieur (107) présentant, un renfoncement (120) qui délimite un dégagement (121) en creux sur la face avant (108) du cadre (100A),
**caractérisé en ce que** ledit dégagement (121) s'étend sur au moins un secteur angulaire qui est délimité entre le côté correspondant du bord périphérique extérieur (107) du cadre (100A) et une partie rectiligne s'étendant en oblique à partir du milieu (B1) du côté du bord périphérique extérieur (107) du cadre (100A), sur une longueur (12) comprise entre le quart et la moitié de la longueur (l1) du côté du bord périphérique extérieur (107) du cadre (100A).

2. Support d'appareillage (100) selon la revendication 1, dans lequel le dégagement (121) présente une profondeur (h1) à partir de la face avant (108) du cadre (100A) qui est supérieure à la moitié de l'épaisseur maximale (e1) du cadre (100A).

3. Support d'appareillage (100) selon la revendication 2, dans lequel le dégagement (121) s'étend depuis la face avant (108) jusqu'à la face arrière (109) du cadre (100A).

4. Support d'appareillage (100) selon la revendication 2, dans lequel le dégagement (121) est délimité du côté de la face arrière (109) du cadre (100A) par un fond (124).

5. Support d'appareillage (100) selon l'une des revendications 1 à 4, dans lequel le bord périphérique extérieur (107) du cadre (100A) présente deux renfoncements (120) respectivement situés sur deux de ses côtés opposés, de manière symétrique par rapport au centre du cadre (100A).

6. Support d'appareillage (100) selon l'une des revendications 1 à 4, dans lequel le bord périphérique extérieur (107) du cadre (100A) présente quatre renfoncements (120) respectivement situés sur ses quatre côtés, de manière deux à deux symétrique par rapport au centre du cadre (100A).

7. Support d'appareillage (100) selon la revendication 6, dans lequel le renfoncement (120) s'étend en longueur sur une distance (l2) supérieure au tiers de la longueur (l1) du côté du bord périphérique extérieur (107) du cadre (100A).

8. Support d'appareillage (100) selon l'une des revendications 6 et 7, dans lequel ledit secteur angulaire présente un angle d'ouverture (c1) supérieur ou égal à la moitié de l'angle (c2) sous-tendu par l'arc de cercle de chaque orifice oblong (111).

9. Support d'appareillage (100) selon l'une des revendications 1 à 8, dans lequel le cadre (100A) est formé d'une seule pièce par moulage d'une matière plastique non chargée en fibres.

10. Appareillage électrique comportant un support d'appareillage (100) selon l'une des revendications 1 à 9, et au moins un mécanisme d'appareillage logé dans une ouverture centrale (106) définie par le cadre (100A).

## Patentansprüche

1. Geräteträger (100), einen Rahmen (100A) umfassend, der mindestens zwei längliche Aufnahmeöffnungen (111) in Kreisbogenform für Befestigungsschrauben (300) aufweist, und der einen peripheren Außenrand (107) umfasst, welcher eine Vertiefung (120) aufweist, die eine vertiefte Aussparung (121) auf der Vorderseite (108) des Rahmens (100A) abgrenzt,
**dadurch gekennzeichnet, dass** sich diese Aussparung (121) in mindestens einem Eckbereich erstreckt, der zwischen der dem peripheren Außenrand (107) des Rahmens (100A) entsprechenden Seite und einem geraden Abschnitt, der sich ausgehend von der Mitte (B1) der Seite des peripheren Außenrands (107) des Rahmens (100A) aus schräg über eine Länge (l2) erstreckt, die zwischen einem Viertel und der Hälfte der Länge (l1) der Seite des peripheren Außenrands (107) des Rahmens (100A) beträgt, abgegrenzt ist.

2. Geräteträger (100) nach Anspruch 1, bei der die Aussparung (121) ausgehend von der Vorderseite (108) des Rahmens (100A) eine Tiefe (h1) aufweist, die größer ist als die Hälfte der maximalen Dicke (e1) des Rahmens (100A).

3. Geräteträger (100) nach Anspruch 2, bei der sich die Aussparung (121) ausgehend von der Vorderseite (108) bis zur Hinterseite (109) des Rahmes (100A) erstreckt.

4. Geräteträger (100) nach Anspruch 2, bei der die Aussparung (121) auf der Hinterseite (109) des Rahmens (100A) durch einen Boden (124) abgegrenzt ist.

5. Geräteträger (100) nach einem der Ansprüche 1 bis 4, bei der der periphere Außenrand (107) des Rahmens (100A) zwei Vertiefungen (120) aufweist, die jeweils auf zwei seiner gegenüberliegenden Seiten symmetrisch in Bezug zum Mittelpunkt des Rahmens (100A) gelegen sind.

6. Geräteträger (100) nach einem der Ansprüche 1 bis 4, bei der der periphere Außenrand (107) des Rahmens (100A) vier Vertiefungen (120) aufweist, die jeweils auf seinen vier Seiten paarweise und symmetrisch in Bezug zum Mittelpunkt des Rahmens (100A) gelegen sind.

7. Geräteträger (100) nach Anspruch 6, bei der sich die Vertiefung (120) der Länge nach auf einer Strecke (12) erstreckt, die größer ist als das Drittel der Länge (l1) auf Seite des peripheren Außenrandes (107) des Rahmens (100A).

8. Geräteträger (100) nach einem der Ansprüche 6 und 7, bei der der Eckbereich einen Öffnungswinkel (c1) größer gleich der Hälfte des Sehnenwinkels (c2) des Kreisbogens jeder länglichen Öffnung (111) aufweist.

9. Geräteträger (100) nach einem der Ansprüche 1 bis 8, bei der der Rahmen (100A) durch Gussformen eines nicht faserverstärkten Kunststoffes aus einem Stück geformt ist.

10. Elektrisches Gerät mit einer Geräteträger (100) nach einem der Ansprüche 1 bis 9 und mindestens einem Gerätemechanismus, der in einer durch den Rahmen (100A) definierten zentralen Öffnung (106) gelagert ist.

## Claims

1. An accessory support (100) comprising a frame (100A) that presents at least two oblong orifices (111), in the shape of circular arcs, for receiving fastener screws (300), and that includes an outer peripheral edge (107) presenting a setback (120) that defines clearance (121) recessed into the front face (108) of the frame (100A);
the accessory support being **characterized in that** said clearance (121) extends at least over an angular sector that is defined between the corresponding side of the outer peripheral edge (107) of the frame (100A) and a rectilinear portion that extends obliquely from the middle (B1) of the side of the outer peripheral edge (107) of the frame (100A), over a length (ℓ2) that lies in the range one fourth to one half of the length (ℓ1) of the side of the outer peripheral edge (107) of the frame (100A).

2. An accessory support (100) according to claim 1, wherein, from the front face (108) of the frame (100A), the clearance (121) presents a depth (h1) that is greater than half the maximum thickness (e1) of the frame (100A).

3. An accessory support (100) according to claim 2, wherein the clearance (121) extends from the front face (108) to the rear face (109) of the frame (100A).

4. An accessory support (100) according to claim 2, wherein, on the side of the rear face (109) of the frame (100A), the clearance (121) is defined by a rear wall (124).

5. An accessory support (100) according to any one of claims 1 to 4, wherein the outer peripheral edge (107) of the frame (100A) presents two setbacks (120) that are situated respectively in two of its opposite sides, in a manner that is symmetrical about the center of the frame (100A).

6. An accessory support (100) according to any one of claims 1 to 4, wherein the outer peripheral edge (107) of the frame (100A) presents four setbacks (120) that are situated respectively in its four sides, in a manner that is symmetrical in pairs about the center of the frame (100A).

7. An accessory support (100) according to claim 6, wherein the setback (120) extends lengthwise over a distance (ℓ2) that is greater than one third of the length (ℓ1) of the side of the outer peripheral edge (107) of the frame (100A).

8. An accessory support (100) according to claim 6 or claim 7, wherein said angular sector occupies an angle (c1) that is greater than or equal to half the angle (c2) subtended by the circular arc of each oblong orifice (111).

9. An accessory support (100) according to any one of claims 1 to 8, wherein the frame (100A) is formed as a single piece by molding a plastics material that does not include a fiber filler.

10. An electrical accessory comprising an accessory support (100) according to any one of claims 1 to 9, and at least one accessory mechanism that is housed in a central opening (106) defined by the frame (100A).
